# FASCICULE DE BREVET EUROPEEN

(11) **EP 2 366 987 B1**
(45) Date de publication et mention de la délivrance du brevet: **01.11.2017**
(21) Numéro de dépôt: 11158111.2
(22) Date de dépôt: 14.03.2011
(51) Int. Cl.: G01K 7/02, G01K 13/00, G01K 13/02, G01K 13/12

(54) **Dispositif de mesure de la température de l'eau revêtant une chaussée**
Vorrichtung zur Temperaturmessung des Wassers auf einer Straßenfläche
Device for measuring water temperature on a road surface

(30) Priorité: 16.03.2010 FR 1051868
(43) Date de publication de la demande: 21.09.2011
(73) Titulaire: Compagnie Générale des Etablissements Michelin, 63000 Clermont-Ferrand (FR)
(72) Inventeur: Buisson, Jérémy, 63450, Saint-Saturnin (FR)
(74) Mandataire: Dequire, Philippe Jean-Marie Denis

(56) Documents cités:
- WO-A1-97/13234
- DE-A1-102006 026 436
- US-A1- 2006 144 121

## Description

La présente invention concerne le domaine de la mesure de la température de l'eau revêtant une chaussée.

On connaît de l'état de la technique un procédé de mesure de performances d'un pneumatique sur chaussée mouillée au cours duquel on utilise un véhicule de mesure sur une chaussée revêtue d'eau comprenant un réservoir unique et des moyens d'arrosage avec l'eau provenant du réservoir unique.

On arrose la chaussée en amont du pneumatique à tester grâce aux moyens d'arrosage lorsque le véhicule est en fonctionnement et on mesure certains paramètres du pneumatique et extérieurs, notamment la température de l'eau revêtant la chaussée en aval du pneumatique et sur laquelle le pneumatique a roulé. A cet effet, le véhicule comprend des moyens de mesure de cette température comprenant un pyromètre infrarouge.

Toutefois, la mesure de la température par le pyromètre infrarouge est perturbée d'une part, par la réflexion de la lumière sur la chaussée mouillée et, d'autre part, par l'eau nébulisée sous forme d'un brouillard de gouttelettes par le pneumatique derrière celui-ci. En effet, ces gouttelettes forment des corps réfléchissants dont la température s'est rapidement modifiée après le passage du pneumatique et qui est différente de celle de l'eau revêtant la chaussée et sur laquelle le pneumatique a roulé.

WO97/13234, DE102006026436 et US2006/0144121 décrivent des dispositifs connus de mesure de performances d'un pneumatique sur chaussée mouillée.

L'invention a donc pour but de fournir une mesure précise de la température de l'eau revêtant la chaussée et sur laquelle le pneumatique a roulé.

A cet effet, l'invention a pour objet un dispositif de mesure de température de l'eau revêtant une chaussée pour étudier le comportement d'un pneumatique, le dispositif comprenant un organe de mesure de la température de l'eau,
**caractérisé en ce que:**
- le dispositif comprend des moyens de canalisation de l'eau revêtant la chaussée au moment où le dispositif roule sur cette chaussée et sur laquelle eau le pneumatique a roulé, les moyens de canalisation de l'eau comprenant une chambre de mesure de la température de l'eau revêtant la chaussée,
- l'organe de mesure comprend une tête de mesure agencée dans la chambre de mesure, et
- le dispositif comprend des moyens de roulage du dispositif sur la chaussée agencés de sorte que la tête de mesure de la température est située à distance de la chaussée.

Grâce au dispositif selon l'invention, on peut mesurer précisément la température de l'eau revêtant la chaussée et sur laquelle le pneumatique a roulé. L'eau dont la température est mesurée est l'eau revêtant la chaussée au moment où le dispositif roule sur cette chaussée. En effet, en réalisant une mesure par contact direct entre l'eau et la tête de mesure dans la chambre de mesure, on évite les perturbations liées aux réflexions de l'environnement du pyromètre sur l'eau revêtant la chaussée et sur les gouttelettes nébulisées. De plus, les moyens de canalisation permettent d'assurer la présence d'eau sur la tête de mesure.

En outre, l'agencement des moyens de roulage permet d'éviter le contact entre la chaussée et la tête de mesure et ainsi tout problème d'usure de l'organe de mesure par frottement au contact de la chaussée.

De préférence, l'organe de mesure est un thermocouple.

Selon des caractéristiques optionnelles du dispositif:
- Les moyens de canalisation comprennent une chambre de récupération de l'eau revêtant la chaussée située en amont de la chambre de mesure en considérant le sens d'écoulement de l'eau par rapport au dispositif.
- La chambre de récupération présente une forme générale évasée dont la section de canalisation de l'eau se rétrécit en considérant le sens d'écoulement de l'eau par rapport au dispositif.

Une telle chambre de récupération permet de canaliser l'eau pour que la tête de mesure soit suffisamment immergée dans l'eau revêtant la chaussée.

L'invention a également pour objet un véhicule de mesure sur une chaussée revêtue d'eau, **caractérisé en ce qu**'il comprend:
- des moyens d'arrosage de la chaussée avec de l'eau provenant du véhicule,
- un dispositif de mesure tel que défini ci-dessus, et
- un pneumatique à tester agencé en aval des moyens d'arrosage de la chaussée et en amont du dispositif de mesure en considérant le sens de déplacement du véhicule, de sorte que, lorsque le véhicule est en fonctionnement, le pneumatique roule sur au moins une partie de l'eau arrosée et le dispositif mesure la température d'au moins une partie de l'eau sur laquelle le pneumatique a roulé.

Le dispositif mesure la température de l'eau revêtant la chaussée au moment où le dispositif roule sur cette chaussée. Un tel véhicule permet de mesurer précisément les variations de la température de l'eau sur laquelle a roulé le pneumatique. Un tel véhicule est notamment utilisé pour simuler et étudier l'adhérence d'un pneumatique sur chaussée mouillée.

Selon d'autres caractéristiques optionnelles du véhicule:
- Le véhicule comprend des moyens de stockage de l'eau comprenant une source, dite froide, d'eau et une source, dite chaude, d'eau, l'eau de la source froide présente une température inférieure à l'eau de la source chaude.
- Le véhicule comprend des moyens de mélangeage de l'eau des sources froide et chaude.

Pour étudier le comportement du pneumatique sur chaussée mouillée, on utilise une ou plusieurs chaussées mouillées prédéterminées. Le comportement du pneumatique est notamment fonction de la température de l'eau revêtant la chaussée mais également du niveau d'adhérence de la chaussée. Or, la température de l'eau revêtant la chaussée est fonction de la température extérieure qui est variable selon la période de l'année où l'on étudie le comportement du pneumatique. Dans l'état de la technique, il est donc nécessaire d'étudier le comportement tout au long de l'année pour obtenir des données sur un intervalle de températures représentatif des conditions d'utilisation du pneumatique, par exemple entre 0°C et 35°C. Toutefois, au cours de l'année, le niveau d'adhérence de la chaussée varie ce qui ne permet pas d'obtenir des données de comportement du pneumatique comparables les unes avec les autres.

Grâce au véhicule selon l'invention, il est possible sur une durée très courte, de l'ordre de quelques heures, d'étudier le comportement sur tout l'intervalle de températures représentatif des conditions d'utilisation du pneumatique. Sur cette durée, le niveau d'adhérence de la chaussée reste constant et permet donc d'obtenir des données du comportement du pneumatique comparables.

De façon optionnelle, le véhicule comprend des moyens de suspension du dispositif de mesure par rapport au véhicule.

Le dispositif de mesure et les moyens de roulage sont ainsi maintenus au contact de la chaussée de sorte que l'eau revêtant la chaussée pénètre dans la chambre de mesure quel que soit l'état de la chaussée.

L'invention a pour autre objet un procédé de mesure de la température de l'eau revêtant une chaussée mouillée prédéterminée, **caractérisé en ce que:**
- on fait rouler un véhicule tel que défini ci-dessus sur la chaussée prédéterminée
- on arrose la chaussée avec de l'eau provenant du véhicule successivement à au moins des première et deuxième températures différentes, et
- pour chaque première et deuxième température, on mesure la température de l'eau arrosée et sur laquelle le pneumatique a roulé.

Grâce au procédé selon l'invention, on peut étudier le comportement du pneumatique pour différentes températures de l'eau revêtant la chaussée sur une durée relativement courte ne permettant pas un changement du niveau d'adhérence de la chaussée.

Avantageusement, on fait rouler le véhicule sur une autre chaussée prédéterminée et on arrose cette autre chaussée avec de l'eau provenant du véhicule successivement à au moins des première et deuxième températures différentes.

Ainsi, on peut également étudier le comportement du pneumatique pour différentes chaussées présentant différents niveaux d'adhérence sur une durée relativement courte.

L'invention sera mieux comprise à la lecture de la description qui va suivre, donnée uniquement à titre d'exemple non limitatif et faite en se référant aux dessins dans lesquels :
- les figures 1 et 2 illustrent un véhicule selon l'invention ;
- les figures 3 à 7 illustrent un dispositif de mesure selon l'invention ; et
- la figure 8 illustre un procédé selon l'invention.

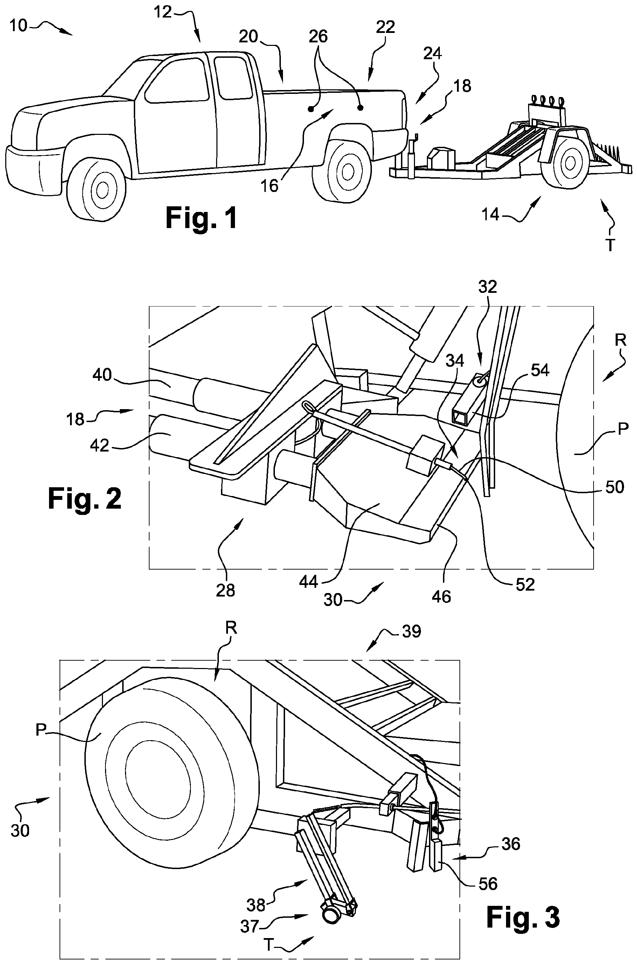

On a représenté sur la figure 1 un véhicule selon l'invention désigné par la référence générale 10. Le véhicule 10 comprend un véhicule de traction 12 et une remorque 14.

Le véhicule 10, ici le véhicule de traction 12, comprend des moyens 16 de stockage d'eau. Le véhicule 10 comprend des moyens 18 de canalisation de l'eau depuis les moyens 16 de stockage jusque vers la remorque 14. Les moyens de stockage 16 comprennent une source 20, dite chaude, et une source 22, dite froide. L'eau de la source 22 présente une température inférieure à celle de la source 20. Le véhicule 10 comprend des moyens 24 de commande du débit de chaque source 20, 22, par exemple des vannes, et des moyens 26 de mesure de la température de l'eau de chaque source 20, 22.

En référence aux figures 2 et 3, le véhicule 10, ici la remorque 14, comprend des moyens 28 de mélangeage de l'eau des sources chaude 20 et froide 22. La remorque 14 comprend également des moyens d'arrosage 30 d'une chaussée T avec l'eau provenant du véhicule 10, en l'espèce avec l'eau provenant des moyens de stockage 16. La remorque 14 comprend des moyens 32 de mesure de la température de la chaussée T située en amont de la chaussée T arrosée par les moyens 30 en considérant le sens de déplacement du véhicule 10 lorsque celui-ci est en fonctionnement et des moyens 34 de mesure de la température de l'eau issue des moyens d'arrosage 30. La remorque 14 comprend une roue R de test comprenant un pneumatique P à tester.

De plus, la remorque 14 comprend des moyens de mesure 36 de la température de la chaussée T située en aval de la chaussée T sur laquelle roule le pneumatique P en considérant le sens de déplacement du véhicule 10 lorsque celui-ci est en fonctionnement et un dispositif 37 de mesure de la température d'au moins une partie de l'eau sur laquelle le pneumatique P a roulé lorsque le véhicule est en fonctionnement. Le pneumatique P est agencé en aval des moyens d'arrosage 30 de la chaussée T et en amont du dispositif 37 en considérant le sens de déplacement du véhicule de sorte que, lorsque le véhicule est en fonctionnement, le pneumatique roule sur au moins une partie de l'eau arrosée par les moyens d'arrosage 30. La remorque 14 comprend des moyens 38 de suspension du dispositif 37 par rapport à la remorque 14. Enfin, le véhicule 10 comprend des moyens 39 de mesure des coefficients de glissement et d'adhérence du pneumatique P.

Comme représenté sur la figure 2, les moyens de canalisation 18 comprennent des conduits 40, 42 entre les moyens de mélangeage 28 et respectivement la source chaude 20 et la source froide 22. Les moyens de mélangeage 28 comprennent une chambre 44 de mélangeage dans laquelle débouche chaque conduit 40, 42 et une sortie 46 de l'eau mélangée sous la forme d'un orifice.

En référence aux figures 3 à 7, les moyens 26 de mesure de l'eau de chaque source 20, 22 comprennent deux thermocouples (non représentés). Les moyens 34 de mesure de l'eau arrosée comprennent également un thermocouple 50 comprenant une tête 52 de mesure située dans la sortie 46 de sorte que la tête 52 mesure la température de l'eau arrosée par les moyens 28. Les moyens 32, 36 comprennent des pyromètres infrarouge 54, 56 situés respectivement en amont et en aval du pneumatique P en considérant le sens de déplacement du véhicule lorsque celui-ci est en fonctionnement.

Le dispositif 37 comprend des moyens 58 de roulage du dispositif 37 sur la chaussée T comprenant une roue 60. Le dispositif 37 comprend également un support 62 des moyens de roulage 58.

Le dispositif 37 comprend des moyens 64 de canalisation d'au moins une partie de l'eau sur laquelle le pneumatique a roulé et revêtant la chaussée T en amont du dispositif 37 en considérant le sens de déplacement du véhicule 10 lorsque celui-ci est en fonctionnement.

Les moyens de canalisation 64 comprennent une chambre 66 de récupération de l'eau sur laquelle le pneumatique a roulé et une chambre 68 de mesure de la température de l'eau revêtant la chaussée T et provenant de la chambre de récupération 66. La chambre 66 est située en amont de la chambre de mesure 68 en considérant le sens d'écoulement de l'eau par rapport au dispositif 37. Le dispositif 37 comprend enfin un organe 70 de mesure de la température de l'eau sur laquelle le pneumatique a roulé et revêtant la chaussée T au moment où le dispositif 37 roule sur cette chaussée T. L'organe 70 comprend une tête 72 de mesure agencée dans la chambre de mesure 68. En l'espèce, l'organe 70 est un thermocouple.

Les moyens de roulage 58 sont agencés de sorte que la tête de mesure 72 soit située à distance de la chaussée T lorsque le dispositif 37 est en fonctionnement. En l'espèce, le support 62 est situé à environ 1 mm de la chaussée T lorsque le dispositif 37 est en fonctionnement.

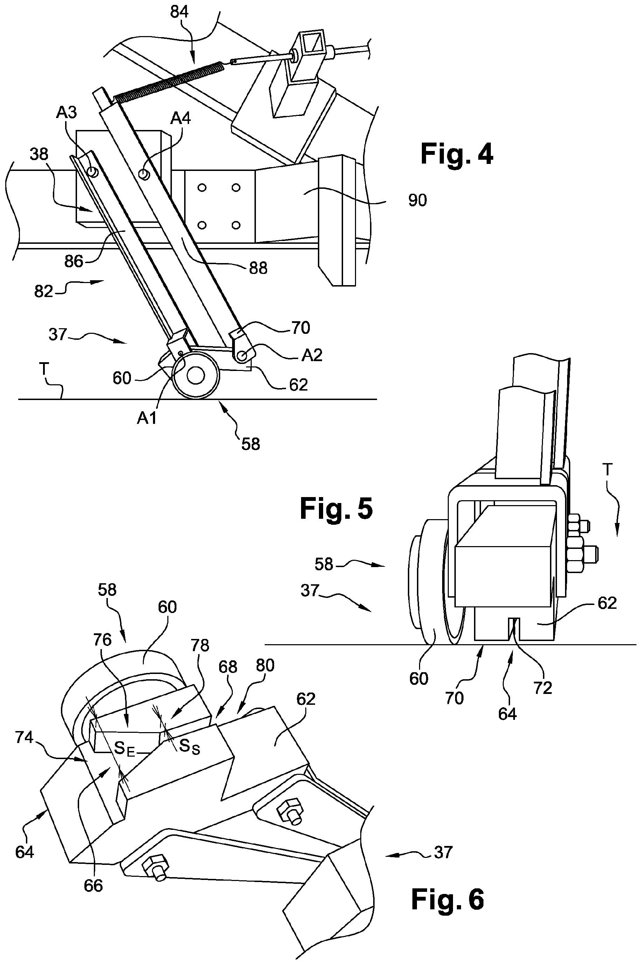

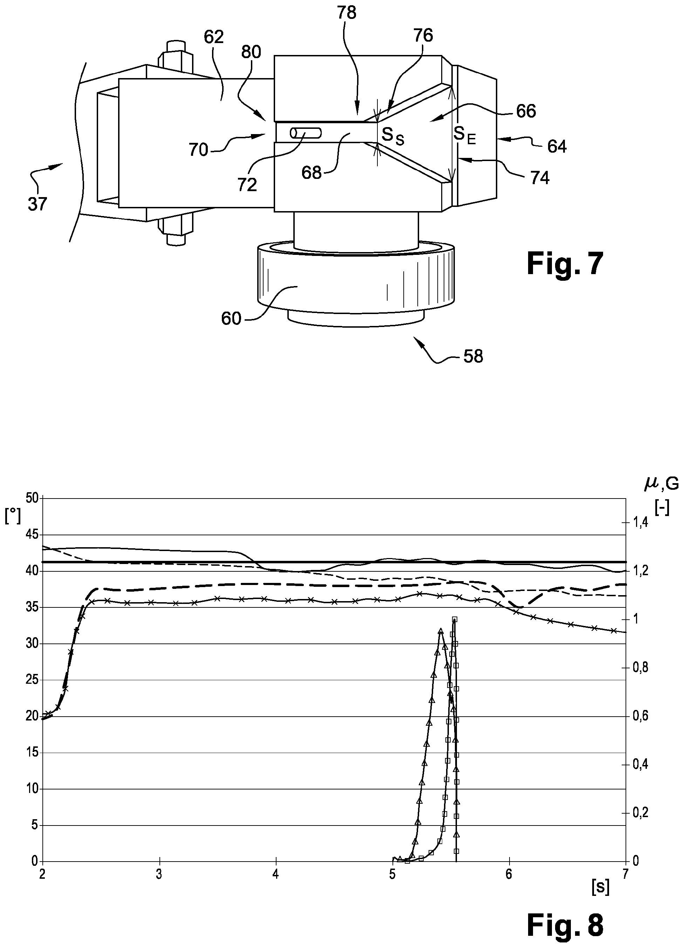

En référence aux figures 6 et 7, les chambres 66, 68 forment des canaux de canalisation de l'eau délimités d'une part, par le support 62 et, d'autre part, par la chaussée T. Ainsi, chaque canal formé par les chambres 66, 68 est ouvert sur la chaussée T. La chambre 66 présente une entrée 74 présentant une section SE et une sortie 76 débouchant dans la chambre de mesure 68 présentant une section SS. La chambre 66 forme un canal dont la forme générale évasée présente une section S de passage de l'eau se rétrécissant en considérant le sens d'écoulement de l'eau par rapport au dispositif 37. Ainsi, SS < SE. La chambre 68 présente une entrée 78 présentant une section SS, l'entrée 78 formant la sortie 76, et une sortie 80 débouchant à l'extérieur du support 62. La chambre 68 forme un canal présentant une section constante SS.

En référence à la figure 4, les moyens de suspension 38 comprennent un parallélogramme déformable 82 ainsi qu'un organe élastiquement déformable 84, en l'espèce un ressort. Le parallélogramme 82 comprend deux branches 86, 88 montées mobiles en rotation autour d'axes parallèles A1, A2 par rapport au support 62 et autour d'axes parallèles A3, A4 par rapport à un châssis 90 du véhicule 10, en l'espèce de la remorque 14. L'organe 84 est agencée entre la barre 88 et le châssis 90 sur lesquels il est fixé.

On a illustré sur la figure 8 un procédé de mesure sur chaussée mouillée et mis en oeuvre au moyen du véhicule 10, en l'espèce un procédé de mesure des performances de freinage du pneumatique P sur chaussée mouillée. Le figure 8 représente les variations en fonction du temps de la température de l'eau mélangée (courbe en trait épais continu), la température de l'eau arrosée (courbe en traits épais pointillés) mesurée par les moyens 34, la température du sol après arrosage en amont du pneumatique P (courbe en trait fin continu) mesurée par les moyens 32, la température du sol après arrosage en aval du pneumatique P (courbe en traits fins pointillés) mesurée par les moyens 36, la température de l'eau en aval du pneumatique P (courbe délimitée par des croix) mesurée par le dispositif 37, la valeur du coefficient d'adhérence du pneumatique (courbe délimitée par des triangles) et la valeur du coefficient de glissement du pneumatique (courbe délimitée par des carrés) mesurées par les moyens 39.

Sur une première chaussée prédéterminée T1, on fait rouler le véhicule 10 muni du pneumatique P.

Lors d'un premier cycle et à partir de t=2,1 s on arrose la chaussée T1 avec de l'eau à T=41,5 °C provenant du véhicule 10. On mesure alors les différentes températures.

A t=5 s, on déclenche le freinage du pneumatique P et on mesure les coefficients de glissement G et d'adhérence µ du pneumatique P.

A t=5,8 s, on arrête l'arrosage. On remarque que les variations des températures mesurées au moyen des pyromètres infrarouge 54, 56 (courbes en trait fin continu et en traits fins pointillés) ne sont pas cohérentes avec les variations des températures mesurées au moyen des thermocouples 50, 70 (courbes en traits épais pointillés et délimitée par des croix). En effet, les températures du sol mesurées en aval et en amont du pneumatique P décroissent alors que les températures de l'eau arrosée mesurées en aval et en amont du pneumatique croissent. La mesure de température du sol au moyen de pyromètres infrarouge ne semble donc pas fiable dans le cas d'une chaussée arrosée.

Puis, lors d'un second cycle, on modifie la température de l'eau arrosée et on arrose la chaussée T1 avec de l'eau à T=50°C provenant du véhicule 10 (non représenté). On ré-itère alors les mesures effectuées de façon analogue à celles effectuées dans le premier cycle.

On pourra effectuer autant de cycles de mesure à autant de températures différentes que nécessaire.

Puis, on fait rouler le véhicule 10 sur une deuxième chaussée prédéterminée T2 présentant des caractéristiques différentes. Ces caractéristiques comprennent par exemple la granulométrie. On ré-itère alors les différents cycles de mesures à autant de températures différentes que nécessaire sur la deuxième chaussée prédéterminée T2.

## Revendications

1. Dispositif (37) de mesure de température de l'eau revêtant une chaussée (T) pour étudier le comportement d'un pneumatique (P), le dispositif (37) comprenant un organe (70) de mesure de la température de l'eau, **caractérisé en ce que:**
- le dispositif (37) comprend des moyens (64) de canalisation de l'eau revêtant la chaussée (T) au moment où le dispositif (37) roule sur cette chaussée (T) et sur laquelle eau le pneumatique (P) a roulé, les moyens (64) de canalisation de l'eau comprenant une chambre (68) de mesure de la température de l'eau revêtant la chaussée (T),
- l'organe de mesure (70) comprend une tête (72) de mesure agencée dans la chambre de mesure (68), et
- le dispositif (37) comprend des moyens (58) de roulage du dispositif (37) sur la chaussée (T) agencés de sorte que la tête de mesure (72) de la température est située à distance de la chaussée (T).

2. Dispositif (37) selon la revendication 1, dans lequel l'organe de mesure (70) est un thermocouple.

3. Dispositif (37) selon l'une quelconque des revendications précédentes, dans lequel les moyens de canalisation (64) comprennent une chambre (66) de récupération de l'eau revêtant la chaussée (T) située en amont de la chambre de mesure (68) en considérant le sens d'écoulement de l'eau par rapport au dispositif (37).

4. Dispositif (37) selon la revendication précédente, dans lequel la chambre de récupération (66) présente une forme générale évasée dont la section de canalisation de l'eau se rétrécit en considérant le sens d'écoulement de l'eau par rapport au dispositif (37).

5. Véhicule (10) de mesure sur une chaussée (T) revêtue d'eau, **caractérisé en ce qu'**il comprend:
- des moyens (30) d'arrosage de la chaussée (T) avec de l'eau provenant du véhicule (12),
- un dispositif de mesure (37) selon l'une quelconque des revendications précédentes, et
- un pneumatique (P) à tester agencé en aval des moyens d'arrosage (30) de la chaussée (T) et en amont du dispositif de mesure (37) en considérant le sens de déplacement du véhicule (10), de sorte que, lorsque le véhicule (10) est en fonctionnement, le pneumatique (P) roule sur au moins une partie de l'eau arrosée et le dispositif (37) mesure la température d'au moins une partie de l'eau sur laquelle le pneumatique (P) a roulé.

6. Véhicule (10) selon la revendication précédente, comprenant des moyens (16) de stockage de l'eau comprenant une source (22), dite froide, d'eau et une source (20), dite chaude, d'eau, l'eau de la source froide (22) présente une température inférieure à l'eau de la source chaude (20).

7. Véhicule (10) selon la revendication 6, comprenant des moyens (28) de mélangeage de l'eau des sources froide (22) et chaude (20).

8. Véhicule (10) selon l'une quelconque des revendications 5 à 7, comprenant des moyens (38) de suspension du dispositif de mesure (37) par rapport au véhicule (10).

9. Procédé de mesure de la température de l'eau revêtant une chaussée mouillée prédéterminée (T1), **caractérisée en ce que:**
- on fait rouler un véhicule (10) selon l'une quelconque des revendications 5 à 8 sur la chaussée (T1),
- on arrose la chaussée avec de l'eau provenant du véhicule (10) successivement à au moins des première et deuxième températures différentes, et
- pour chaque première et deuxième température, on mesure la température de l'eau arrosée et sur laquelle le pneumatique (P) a roulé.

10. Procédé selon la revendication précédente, dans lequel on fait rouler le véhicule (10) sur une autre chaussée (T2) prédéterminée et on arrose cette autre chaussée (T2) avec de l'eau provenant du véhicule (10) successivement à au moins des première et deuxième températures différentes.

## Patentansprüche

1. Vorrichtung (37) zur Temperaturmessung des Wassers, das eine Straße (T) bedeckt, um das Verhalten eines Reifens (P) zu untersuchen, wobei die Vorrichtung (37) ein Organ (70) zur Messung der Temperatur des Wassers umfasst, **dadurch gekennzeichnet, dass**:
- die Vorrichtung (37) Mittel (64) zur Kanalisierung des Wassers umfasst, das die Straße (T) zu dem Zeitpunkt bedeckt, zu dem die Vorrichtung (37) auf dieser Straße (T) rollt, und über welches der Reifen (P) gerollt ist, wobei die Mittel (64) zur Kanalisierung des Wassers eine Kammer (68) zur Messung der Temperatur des Wassers, das die Straße (T) bedeckt, umfassen,
- das Messorgan (70) einen Messkopf (72) umfasst, der in der Messkammer (68) angeordnet ist, und
- die Vorrichtung (37) Mittel (58) zum Rollen der Vorrichtung (37) auf der Straße (T) umfasst, die derart angeordnet sind, dass sich der Messkopf (72) für die Temperatur in einem Abstand von der Straße (T) befindet.

2. Vorrichtung (37) nach Anspruch 1, wobei das Messorgan (70) ein Thermoelement ist.

3. Vorrichtung (37) nach einem der vorhergehenden Ansprüche, wobei die Kanalisierungsmittel (64) eine Kammer (66) zur Rückgewinnung des die Straße (T) bedeckenden Wassers, das sich, auf die Fließrichtung des Wassers bezüglich der Vorrichtung (37) bezogen, vor der Messkammer (68) befindet, umfassen.

4. Vorrichtung (37) nach dem vorhergehenden Anspruch, wobei die Rückgewinnungskammer (66) eine konisch erweiterte allgemeine Form aufweist, deren Querschnitt zur Kanalisierung des Wassers, auf die Fließrichtung des Wassers bezüglich der Vorrichtung (37) bezogen, sich verengt.

5. Fahrzeug (10) zur Messung auf einer mit Wasser bedeckten Straße (T), **dadurch gekennzeichnet, dass** es umfasst:
- Mittel (30) zur Berieselung der Straße (T) mit Wasser, das von dem Fahrzeug (12) stammt,
- eine Messvorrichtung (37) nach einem der vorhergehenden Ansprüche, und
- einen zu testenden Reifen (P), der, auf die Fahrtrichtung des Fahrzeugs (10) bezogen, nach den Mitteln zur Berieselung (30) der Straße (T) und vor der Messvorrichtung (37) angeordnet ist, derart, dass, wenn das Fahrzeug (10) in Betrieb ist, der Reifen (P) auf wenigstens einem Teil des zur Berieselung verwendeten Wassers rollt und die Vorrichtung (37) die Temperatur wenigstens eines Teils des Wassers misst, über welches der Reifen (P) gerollt ist.

6. Fahrzeug (10) nach dem vorhergehenden Anspruch, welches Mittel (16) zur Speicherung des Wassers umfasst, die eine sogenannte kalte Quelle (22) von Wasser und eine sogenannte warme Quelle (20) von Wasser umfassen, wobei das Wasser der kalten Quelle (22) eine Temperatur aufweist, die niedriger als die des Wassers der warmen Quelle (20) ist.

7. Fahrzeug (10) nach Anspruch 6, welches Mittel (28) zum Mischen des Wassers der kalten (22) und der warmen Quelle (20) umfasst.

8. Fahrzeug (10) nach einem der Ansprüche 5 bis 7, welches Mittel (38) zur Aufhängung der Messvorrichtung (37) bezüglich des Fahrzeugs (10) umfasst.

9. Verfahren zur Messung der Temperatur des Wassers, das eine vorbestimmte befeuchtete Straße (T1) bedeckt, **dadurch gekennzeichnet, dass**:
- ein Fahrzeug (10) nach einem der Ansprüche 5 bis 8 auf der Straße (T1) fahren gelassen wird,
- die Straße nacheinander mit von dem Fahrzeug (10) stammenden Wasser mit wenigstens einer ersten und einer zweiten Temperatur, die verschieden sind, berieselt wird, und
- für die erste und die zweite Temperatur jeweils die Temperatur des Wassers gemessen wird, das zur Berieselung verwendet wurde und über welches der Reifen (P) gerollt ist.

10. Verfahren nach dem vorhergehenden Anspruch, wobei das Fahrzeug (10) auf einer weiteren vorbestimmten Straße (T2) fahren gelassen wird und diese weitere Straße (T2) nacheinander mit von dem Fahrzeug (10) stammenden Wasser mit wenigstens einer ersten und einer zweiten Temperatur, die verschieden sind, berieselt wird.

## Claims

1. Device (37) for measuring the temperature of the water covering a road surface (T) to study the behaviour of a pneumatic tyre (P), the device (37) comprising a member (70) for measuring the temperature of the water,
**characterized in that**:
- the device (37) comprises means (64) of channelling the water covering the road surface (T) at the time when device (37) rolls on this roadway (T) and on which the pneumatic tyre (P) rolled, the means of channeling the water comprising a chamber (68) for measuring the temperature of the water covering the road surface (T),
- the measuring member (70) comprises a measuring head (72) situated in the measuring chamber (68), and
- the device (37) comprises means (58) of driving the device (37) over the road surface (T) which means are arranged in such a way that the temperature measuring head (72) is situated at some distance from the road surface (T).

2. Device (37) according to Claim 1, in which the measuring member (70) is a thermocouple.

3. Device (37) according to either one of the preceding claims, in which the channelling means (64) comprise a chamber (66) in which to collect the water covering the road surface (T) situated upstream of the measuring chamber (68) when considering the direction in which the water flows with respect to the device (37).

4. Device (37) according to the preceding claim, in which the collecting chamber (66) has a flared overall shape, the water channelling section of which narrows when considering the direction of flow of water with respect to the device (37).

5. Test vehicle (10) for measuring on a road surface (T) covered with water, **characterized in that** it comprises:
- means (30) for sprinkling the road surface (T) with water taken from the vehicle (12),
- a measuring device (37) according to any one of the preceding claims, and
- a tyre (P) to be tested, positioned downstream of the means (30) for sprinkling the road surface (T) and upstream of the measuring device (37) when considering the direction of travel of the vehicle (10), so that when the vehicle (10) is running, the tyre (P) drives over at least some of the sprinkled water and the device (37) measures the temperature of at least some of the water over which the tyre (P) has driven.

6. Vehicle (10) according to the preceding claim, comprising water storage means (16) comprising a source (22), known as the cold source, of water and a source (20), known as the hot source, of water, the water from the cold source (22) having a lower temperature than the water from the hot source (20).

7. Vehicle (10) according to Claim 6, comprising means (28) of mixing the water from the cold (22) and hot (20) sources.

8. Vehicle (10) according to any one of Claims 5 to 7, comprising means (38) of suspending the measuring device (37) with respect to the vehicle (10).

9. Method for measuring the temperature of the water covering a predetermined wet road surface (T1), **characterized in that:**
a vehicle (10) according to any one of Claims 5 to 8 is driven over the road surface (T1),
the road surface is sprinkled with water from the vehicle (10) at least at first and second different temperatures in succession, and
for each first and second temperature, the temperature of the water that has been sprinkled and over which the tyre P is driven, is measured.

10. Method according to the preceding claim, in which the vehicle (10) is driven over another predetermined road surface (T2) and this other road surface (T2) is sprinkled with water from the vehicle (10) at least at first and second different temperatures in succession.
